Europäisches Patentamt

(19) European Patent Office

Office européen des brevets

(11) Publication number: **0 297 663 B1**

(12) # EUROPEAN PATENT SPECIFICATION

(45) Date of publication of patent specification:
25.09.91 Bulletin 91/39

(51) Int. Cl.⁵ : **B41J 5/10**

(21) Application number: 88201307.1

(22) Date of filing: 23.06.88

(54) Keyboard for a word typewriter.

(30) Priority: 30.06.87 NL 8701535

(43) Date of publication of application:
04.01.89 Bulletin 89/01

(45) Publication of the grant of the patent:
25.09.91 Bulletin 91/39

(84) Designated Contracting States:
AT BE CH DE ES FR GB GR IT LI LU NL SE

(56) References cited:
DE-C- 586 252
DE-C- 703 781
FR-A- 2 354 202
FR-A- 2 389 491
FR-A- 2 587 815
US-A- 4 332 493

(73) Proprietor: H C S Technology N.V.
Bruistensingel 216
's-Hertogenbosch (NL)

(72) Inventor: van Ardenne, Robertus Antonius
Maria
35, Willem de Zwijgerlaan
NL-2252 VN Voorschoten (NL)

(74) Representative: Keijser, Johannes Maurits
L.F. et al
Exterpatent Willem Witsenplein 4 P.O. Box
90649
NL-2596 BK 's-Gravenhage (NL)

Jouve, 18, rue Saint-Denis, 75001 PARIS

# Description

The invention relates to a keyboard for recording and/or reproducing written information in a typewriter, word processor, printer, computer or in telecommunications equipment, according to the principle of the so-called word typewriter, which keyboard has a group of vowel keys in the centre consisting of three columns, to the left thereof a group of initial consonant keys and to the right thereof a group of final consonant keys, the vowel keys in the outer columns of the vowel keys group each forming part of a row in an adjacent block of keys otherwise containing consonants, and also facilities for reproducing capitals of the letters and for reproducing figures and punctuation marks, the keys in some cases being situated in blocks containing both rows and columns and the keys in the centre column of the vowel keys and the bottom rows — intended to be operated with the thumb— of consonant keys are offset with respect to the adjacent row or column, respectively, all the keys being connected to an electronic processing unit which, by means of code signals, arranges the information from keys struck approximately or exactly simultaneously into syllabes to be recorded or to be reproduced.

Such a keyboard is known from European Patent 53,168 (WO 81/03641). This known equipment is based on the principle that only a limited number of consonants is present both in the group of initial consonant keys and in the group of final consonant keys and that the missing consonants are formed by simultaneously depressing a particular combination of consonant keys which are in fact present. The intention of the small number of keys present was to achieve an increase in the typing speed. Despite the fact that an attempt was made to so construct the board and to construct the lettering in a manner differing from the standard typographic configuration such that the combination of two letter keys depressed at the same time which in shape or sound evoke the image of a missing letter, and is processed to form said letter, the result was that it is only possible to operate said known machine after a special training. Even after said training, operating the machine demands a continuous mental effort to think of the correct key combination for the letters which are not immediately recognizable.

Furthermore, in the known equipment, a so-called shift key is used which does not, as in the case of the traditional qwerty keyboard, cause the capital version of the letters to appear and, in the case of figure and symbol keys, a different symbol, but with which figures are formed by simultaneously depressing said shift key and letter keys.

In the known machine mentioned, to reproduce the capital version of the letter symbols, a separate bar to be operated with the ball of the hand has to be depressed, but with the complication that said bar only operates as such if it is pressed separately and beforehand, whereas if one or more letter keys which represent initial consonants are depressed at the same time, the letter h is reproduced.

A space bar, also to be operated with the ball of the hand is complicated to the extent that it only reproduces spaces if it is depressed in the case of letter-after-letter depression, whereas, if it is pressed at the same time as a syllable, it results in said syllable being joined to the preceding syllable ; in the latter case it therefore acts in fact as a "no-space bar".

The last mentioned operation also indicates the only way in which the known machine is capable of combining a number of syllables to form a single word. This is difficult to carry out. After all, the limitation of the possibilities thereof is determined by the fact that only one group of consonants is available.

This, and also other drawbacks associated with the known machine, have resulted in a very highly set psychological acceptance threshold, as a result of which the commercial success of the equipment has remained very limited. In other words, however good the intentions were which lay behind the known equipment, the final result was apparently simple but in fact too complicated to find acceptance on a large scale. This is illustrated by the fact that anyone who has not been trained on said keyboard is usually not even capable of typing his own name.

The object of the present invention is therefore to provide a word typewriter which eliminates said drawbacks and which has a much lower acceptability threshold. More particularly, the object of the invention is to provide a keyboard which produces, in a very rapid manner, running and complete text and also data input (both for letter and figure material), the risk of incorrectly striking or confusing symbols being appreciably decreased. In striking the keys, the words or parts of words should be constructed in the simplest manner, namely in the same manner as they are written, from left to right the principle then being retained that all the necessary keus are struck at the same time and that the electronic processing unit provides for the arrangement of the data concerned.

For this purpose, the keyboard according to the invention is characterized in that the group of initial consonant keys and the group of final consonant keys both contain substantially all the consonants, and in that the vowel keys in the centre column are hexagonal and are inserted between the keys of the outer columns which are matchingly shaped at the adjacent side.

A complete, directly accessible alphabet is thus present on the keyboard as a minimum. This is very beneficial for the clear arrangement and it promotes the easy formation of the words without very concentrated consideration continously being necessary.

The apparent complication and retardation of the typing speed which is the consequence of the presence of a complete or virtually complete series of consonants as initial consonants and again as final consonants are very effectively eliminated by the feature that all keys struck will result in the typing of at least as many characters, and further by the hexagonal shape and the "inserted" arrangement of the vowel keys in the center column. In this connection, use is made of a measure which has also already been used in the known machine, namely that the configuration, the height and the placing of the keys are such that two keys can easily be depressed simultaneously with one finger. According to the invention the formation of triple positions is simplified and the number of places where triple positions can be made, is enlarged, particularly with the vowels.

In this connection, it should be pointed out that in the machine known from European Patent 53,168, it was possible to form consonants which did not have their own key with double positions — also termed slit positions in said patent. In contrast thereto, double and even triple positions mean in the case of the machine according to the invention that the two or three keys depressed at the same time are also incorporated at the same time in code and processed to form the word.

The facilities, determined by the anatomy of the hand, for making use of double and triple positions are increased by a functional layout according to language. This is understood to mean, inter alia, that the position of the various letters on the various keys (the layout) is chosen on the principle that letters which frequently occur in consecutive positions in the language are to be found on the keyboard in positions which are adjacent to each other. It is therefore precisely those frequently occurring letter combinations which can be struck with double or triple positions. The layout is therefore obviously dependent on the language. There are, for example, appreciable differences in the frequency and positions of occurence of the letters in the Dutch language, on the one hand, and, for example, English, on the other hand.

By placing the consonant keys in rows and columns, the keys having a usual rectangular or square base area, the maximum number of double consonant positions becomes possible, namely by simultaneously depressing keys situated both above each other and next to each other.

It is, however, of importance that said bottom rows — intended to be operated with the thumb — of consonant keys are offset by half a space with respect to the rows of the blocks of consonant keys situated above them. The consonants which most frequently occur in the language immediately before or immediately after a vowel or a pair of vowels can then be fitted in said bottom row.

As a further difference with respect to the known word typewriter, the invention proposes that a doubling key is situated beneath the group of vowel keys.

On the basis of the fact that even in the known word typewriter, as stated above, a space bar is already present at the bottom according to the invention the length of the space bar is chosen so that it extends from the first initial consonant in the bottom row to the last final consonant in the bottom row.

This makes it possible to achieve the result that the space bar can be depressed by one of the thumbs at the same time as a word or last part of a word, formed in one stroke, in order to produce a space. In this manner, the situation is avoided that a separate movement is required after each word for the space following each word.

Attention is drawn to the fact that the concept of "syllable" may have different meanings for different languages. For example, the English word "NONE" is considered there as one syllable because it represents one sound, while the same word will be interpreted, according to Dutch rules, as consisting of two syllables, "NO" and "NE".

Something similar applies to the concept "all the consonants". Because X does not exist in English as an initial consonant, it does not need to occur in the group of initial consonants in an English keyboard either. Apart from this, within the scope of the inventive idea, there is always the option of not assigning one or more little used letters their own key either in the case of the initial consonants or in the case of the final consonants but of causing it to be generated by a dohble position of other keys. The expression "substantially all the consonants" should therefore be interpreted in this sense in the claims.

It is pointed out that DE-C-586252 discloses a keyboard for a syllable typewriter having, on either side of a vertically oriented group of vowels, two virtually complete groups of consonants. All keys are hexagonal, so that the keyboard in its entirety obtains a honeycomb structure in which each key, at its top and at its bottom, is inserted between two adjacent keys of the row situated above and below it, respectively. In this way it is possible to make at will and everywhere twofold and threefold strokes. Above all, however, this feature was proposed in order to be sure, as a result of the arrangement of all letters obliquely one below the other, about the order in which the various letters arrive in the final text, in a manner which can not be misunderstood mechanically. Given the fact that a purely mechanical machine is concerned, this order would not be unambiguous in case of arrangement in rows and in columns.

The invention starts from the understanding that for nearly all consonants, both in the group of initial and in the group of final consonants, it is not desirable at all to make threefold positions with one finger, and that this desirability does exist with vowels. Therefore, the invention applies the principle of the hexagonal shape of keys only to a very limited extent, to wit only within the vowel group. Otherwise the invention gives preference to the advantages which can be obtained by an arrangement in rows and columns. (The letter order in case of two keys situated directly one above the other is determined by the software). At the same time, however, by the mutual insertion of adjacent keys, where the hexagons have been turned 90° relative to the key position in the honeycomb structure in the case of the keyboard according to the abovementioned German patent, the problem has been solved of the transition between the hexagonal keys, which are favorable for making threefold positions, and the rectangular keys in rows and columns in the blocks where mainly single or twofold positions are to be made. Finally, in this manner it is made possible to make twofold positions with all vowel keys which are situated vertically one above the other, in contract to the case of the abovementioned German patent.

The invention will be explained below with reference to the accompanying drawing.

Figure 1 shows a keyboard with a layout which is ideal for the English language ;

Figure 2 shows the keyboard in a construction which is ideal for the Dutch language ;

Figure 3 shows diagrammatically the shape of a few adjacent keys ;

Figure 4 is a block diagram of the connection of the keyboard to the electronic processing unit and subsequently to the external processing unit.

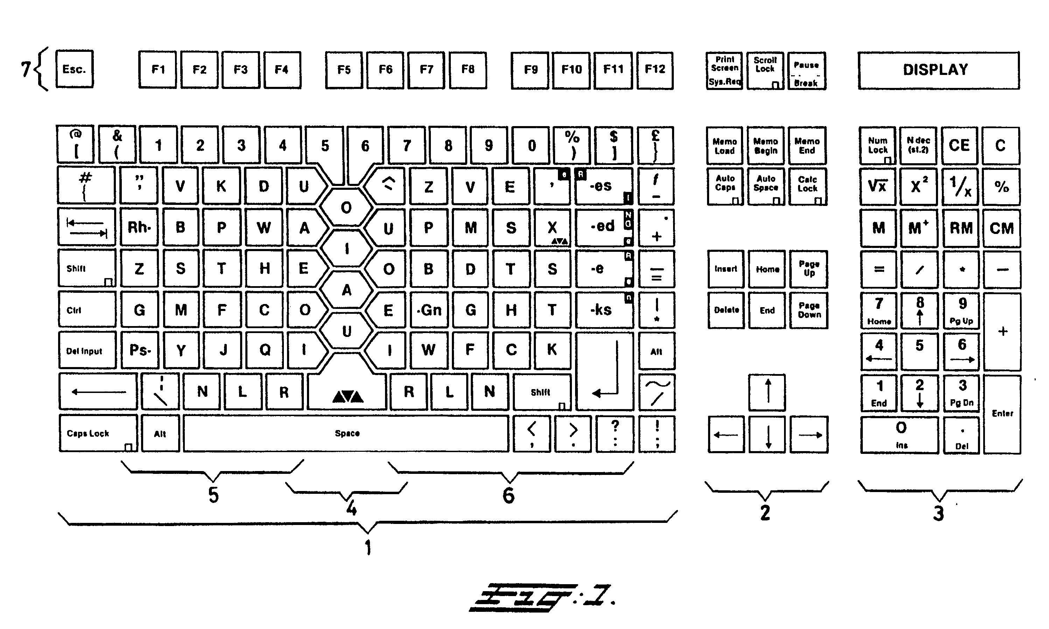

In the embodiment of the keyboard shown in Figure 1, the section to which the invention relates is indicated in its entirety by 1. Next to it is situated, in a manner known per se, a section containing the cursor and screen control keys, indicated by 2, and a numerical section 3.

The section 1 comprises in the centre a block 4 containing vowel keys, to the left thereof a block 5 containing consonant keys which function as initial consonants, and to the right of the vowel block, a block 6 containing consonant keys which serve as final consonant keys. At the top there is a row, indicated by 7, of function keys in one row which, also in a manner known per se, stands apart from the other keys in sections 1 and 2.

In the case of a keyboards which is provided with an input section 1 according to the invention, not only can consecutive separate letters be struck, but also several syllables, and even a complete word consisting of several syllables can be struck with one stroke. Such a polyphonemic input is carried out with both hands ; in principle, all the fingers participate in this stroke process. The principle of forming syllables and words from the information relating to the letters truck separately is based on the following main types of syllables or combinations thereof :

1. Only one vowel, for example "I" (in, for example, Ideal) ;

2. initial consonant(s) + vowel(s), for example, "NO" ;

3. vowel(s) + final consonant(s), for example "ON" ;

4. initial consonant(s) + vowel(s) + final consonant(s), for example "NON" ;

5. vowel(s) + initial consonant(s) + vowel(s), for example "OPEra" ;

6. initial consonant(s) + vowel(s) + final consonant(s) + vowel(s), for example "NONE" ;

7. initial consonant(s) + vowel(s) + final consonant(s) + vowel(s) + final consonant(s), for example "THUNDER" ;

8. initial consonant(s) + vowel(s) + final consonant(s) + vowel(s) + final consonant(s) + vowel(s), for example "SEVERE".

The types 1 up to and including 4 mentioned were also possible in the case of the known keyboard.

It is evident that only the consonant X is missing in the block 5 for the initial consonants for the English version in Figure 1 and that the letter Q is missing in the block 6 for the final consonants ; in the English language, those letters do not occur as initial or as final consonants respectively. Apart from that, both block 5 and block 6 contains all the consonants.

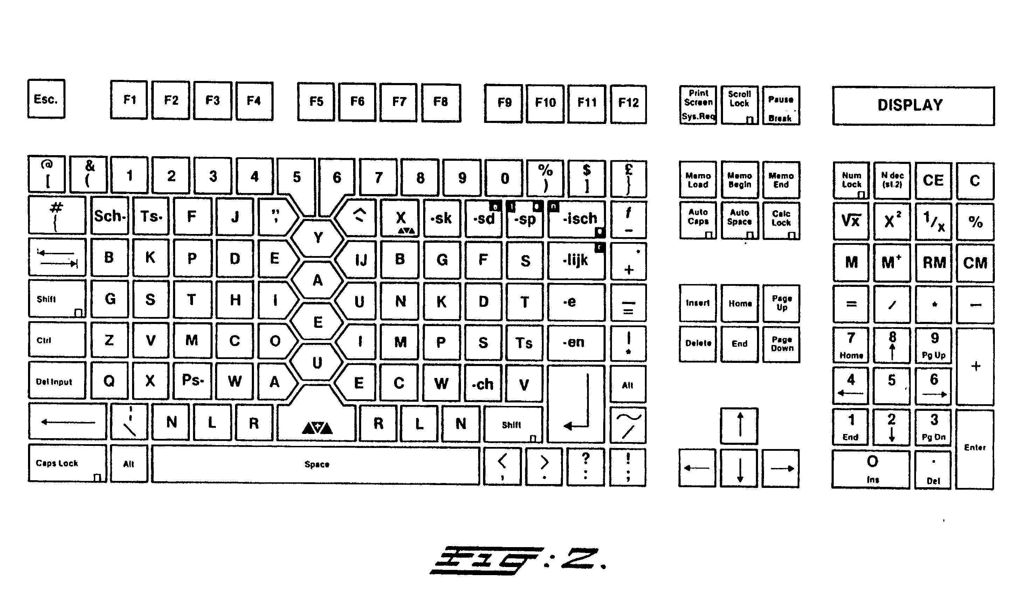

In both blocks of consonants, the keys are situated horizontally adjacent to each other, as a result of which rows are produced. Most of the keys in said blocks are also situated vertically above each other, as a result of which columns are produced. In addition, as a result of a suitable shape and height of the keys, two keys situated next to each other or two keys situated above each other can consequently easily be depressed (double positions). The point is that words are reproduced as much as possible by simultaneously depressing keys. These possibilities are appreaciably increased by the double positions mentioned. Triple positions are also possible, inter alia, because the bottom row of consonants, containing the consonants N, L and R in block 5 and the same letters in a different sequence in block 6, are offset by half a space with respect to the row above them. The W, the R and the A, for example, can therefore easily be depressed (in the Dutch board in Figure 2).

The number of possibilities of double and triple positions and the ease of striking them are increased further in the block 4 for the vowels. Three columns can be distinguished in this vowel block 4. The keys in the centre column are offset by half a key height with respect to those in the left-hand and the right-hand column and, in addition, they have a hexagonal base area, with horizontal top and bottom edges and with points which point to the left or to the right. The vowel keys in the left-hand column are of pentagonal construction, with the point pointing to the right, and those in the right-hand column are pentagonal with the point pointing to the left. In this manner, the vowel keys in the centre column are inserted between two vowel keys in the left-hand column and in the right-hand column, while conversely, most of the keys in the right-hand and in the left-hand column are inserted between the keys in the centre column.

In this way, with only a slight movement of the finger, it is possible to depress only the U at the top in the left-hand column, only the A which is situated underneath it, or only the O in the centre column situated next to these two keys, but the U and O can also be depressed simultaneously, the A and O can be depressed simultaneously, but, in addition, all three letters can be depressed simultaneously.

Furthermore, it is evident that the vowel block 4 contains a total of thirteen vowel keys, as a result of which the letter A and the letter E can each be included twice and the other vowels can each be included three times. As a result of this striking vowels in the correct sequence within a syllable or word is very much facilitated. Each vowel key in the left-hand column is situated in a row of keys in the initial consonant block, and equally, each vowel key in the right-hand column is situated in a row in the final consonant block. This facilitates the formation of double positions of an initial consonant and a vowel, and also of a vowel with a final consonant.

Right at the bottom of the centre column of the vowel block 4 there is situated a key indicated by an AVA symbol, which is a doubling key. If this is combined in one stroke with a single vowel key, the result is a doubling of said vowel. Here, however, there is the possibility of solving specific problems in a language. Because the combination ii does not occur in the modern western languages, the Y can be formed on pressing the I with the doubling key for the English language, but, for example, the IJ for the Dutch language. Furthermore, it is of advantage if depressing the AVA key and the triple vowel combination IUO results in YOU in the English version. In the Dutch version, for example, combination of the AVA key with the combination IE, EU, AU and IO respectively can be used to produce the vowel group IEUW, EEUW, AUW or OOI.

The block 5 containing the initial consonants contains two keys with consonant combinations, namely Rh- and Ps-. On the right of the separate final consonants in the block 6 some keys of the separate final consonants in the block 6 some keys with the syllabic endings -es, -ed, -e and -ks are likewise also encountered, while the block 6 also incorporates a special key for the combination Gn which occurs in the English language.

Furthermore, the word forming possibilities can be increased still further by having some double positions form completely different letter combinations from those on the separate keys. The ending keys -es and -ed are used for forming -ing, as stated in small letters on said keys, and the ending -er is obtained with the apostrophe key and the -es key.

With the partitioning of the keyboard according to the invention there is room for a separate key for an unsounded E. It is to be found in the final consonant block 6, in the top row.

In the English layout in Figure 1, the letter X accompanied by the doubling symbol is to be found in the second row of the final consonant group 6. Making use of the fact that the letter X as a rule never occurs in double form in the modern western languages, the equipment can be constructed so that a doubling of said final consonant key, for example buZZ, can be carried out by combining striking of this key with some other final consonant keys.

There are still specific possibilities which, because a patent application does not need to be a complete user instruction manual, will not all be enumerated at this point. However, they always involve facilities for increasing the typing speed for experienced users ; knowledge of those facilities is not necessary to be able to operate the keyboard. The acceptance threshold is therefore not increased as a result of this.

The figures are incorporated on separate keys which extend as a row along the top of the three blocks 4, 5 and 6. The shift keys — for convenience of operation two are present in different positions — therefore serve exclusively for switching the lower case and capital forms of the letters and for switching the various symbols which are provided in twos on one key. As regards these symbol keys, attention is drawn to the fact that the most used symbols are in each case in the position in which the shift key does not have to be depressed. The shift keys are so positioned that all the symbol keys which also have a symbol in the shift position can be depressed together with a shift key at one go using one hand. If a shift key is depressed beforehand, this results in a hold function with the subsequent letter being reproduced in capital form, and this is indicated in that a small lamp (LED) in the shift key lights up in the meantime.

In the bottom row a space bar is present. This runs from the letter N in block 5 to the N in block 6. As a result of this, the letters N, L and R in block 5 or R, L and N in block 6 can always be depressed with the thumb simultaneously with the space bar.

The reason for this is that the three letters mentioned N, L and R mostly occur both in English and Dutch just before or just after a vowel when these letters occur together with other consonants. Both in the block of initial consonants and in the block of final consonants, they are at a position in which they will be depressed with the thumb. It then requires no additional effort to depress the space bar with the same thumb in the same movement. As a result of that simultaneous depression of the space bar, a separate operation for causing the space to be produced at the end of the word formed is avoided.

Both in block 5 and in block 6, the keys for the letters N, L and R are placed half a key space inwards with respect to the rows situated above them in the same blocks. As a result of this they end up nearer each other, but above all, these six keys are then easier to reach with a thumb movement. In the meantime, the doubling key situated in between in line with the centre column of the vowel group 4 remains of sufficient width for it readily to be capable of being involved in a double or triple position with the adjacent keys both at the left-hand and at the right-hand side.

In view of the said occurrance of the letters N, L and R immediately before and after the vowels, they are also as a rule placed last in the group of initial consonants and first in the group of final consonants for sorting the key codes, which will be described in more detail.

The punctuation marks, . : ; are advantageously provided at the end of the group of final consonants on keys adjacent to each other. They are then logically and easily accessible. In the version shown, the positioning chosen therefore is in line with the space bar.

In contrast with the known equipment, the keyboard is completed by a backspace key, a tabulator key and a Ctrl (Control) key and such keys. Attention is also drawn to the DEL INPUT key which can be depressed in order to delete a number of strokes.

The layout shown in Figure 2, which is ideal for the Dutch language, is based on the same principles as the English version. A different positioning of the letters on the keys is noticed, and obviously also different consonant combinations in the initial consonants and different ending combinations in the case of the final consonant keys. The positioning of the letters has been optimized in both cases on the basis of an analysis of, on the one hand, the English language and, on the other hand, the Dutch language, but is remains possible, of course, also to work in any other language with a keyboard which is ideal for the one language.

As regards the optimization, the versions shown in Figures 1 and 2 are based on the same principle which can also be used for all other languages. Apart from the letters N, L and R, which occupy a special place in the word formation in both languages, both the initial consonant group 5 and the final consonant group 6 contain five rows. On the basis of an analysis which has been carried out of the occurrence of an analysis which has been carried out of the occurrence of letters and letter combinations in each language, the third row (that is to say the centre row) is as a principle used for the letters which occur most frequently, the rows 2 and 4 for the letters which are used somewhat less frequently, and the rows 1 and 5 for the letters which occur least frequently. This occasions the greatest convenience and the highest working speed if a large number of keys are struck at the same time according to the principle of the word typewriter.

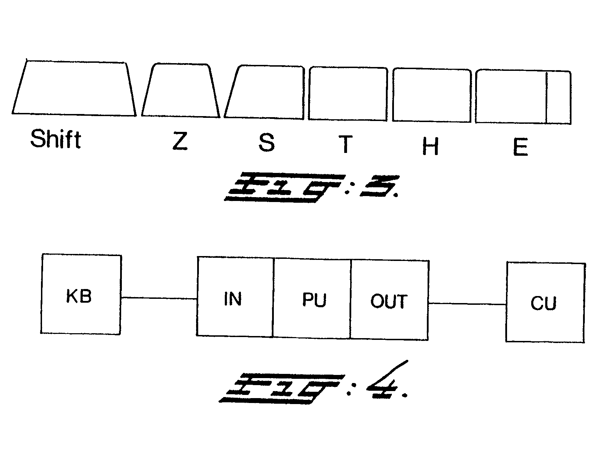

In view of the formation of multiple positions, the invention also furthermore provides a special shape for the keys. For this purpose, reference is made to Figure 3 which is intended as a view in the direction of the centre row of initial consonant keys in the English board in Figure 1. It is evident that the keys have in some cases vertical side faces and in other cases sloping side faces. The keys for the H and the E are both straight on the sides facing each other. The distance between the keys near the top face is thus minimal and it is therefore easy to form a double position by depressing the H and the E. The same applies to the T and the H, and again to the S and the T, since those letter combinations both occur. Because, however, the letter combination ZS does not occur in the English language, a double position on those two keys not only serves no purpose, but it could even give rise to an error. In order to reduce the number of incorrect strokes in the form of double positions, it is evident that the Z key and the S key both have slopes on the faces which face each other. As a result of this, the distance between the top faces is large and it is virtually impossible to form a double position with those keys. The same again applies therefore to the faces of Z key and the shift key which face each other because the last mentioned is of course never struck in a double position with an adjacent letter. The same principle of vertical construction of adjacent keys in the case of a possible double position, and a sloping face in the case where a double position must be ruled out, can be applied in the case of keys which are adjacent to each other in the columns (for example, the W and H).

This idea of chamfering a key which must not be struck may, furthermore, be used (not shown) where, for example, at the bottom of the Dutch board, the W and the R can be struck as a double position. Because, however, the R is in the row which is offset by half a key space, the danger could consequently arise that the L situated next to the R is also depressed. Such a triple position is meaningless in the Dutch language, and in order to avoid this, not only are the side faces of the L facing the W and the R of sloping construction, but the right-hand top corner thereof is also additionally chamfered.

In relation to the construction and the operation of the electronic processing unit, it should first of all be remembered that, in the case of the equipment known from European Patent 53,168, a code is indeed initially assigned to each key, but the coding device is so constructed that if the codes of two consonant keys are present at the same time, a new code is generated which corresponds to a consonant without its own key. In the case of the invention, on the other hand, all the consonants are already present in the initial consonant block 5 and in the final consonant block 6. In order to be able to deliver complete running text, it is therefore sufficient if the device for generating the codes is so constructed that each key produces its own specific code. In each case, whenever there is a change with respect to the zero position, this will lead to a series of one or more codes (code string). The electronic processing unit is, furthermore, so constructed that, for each stroke, the codes of all the keys depressed simultaneously in that stroke are taken stock of and then placed in order. In the ordering, the principle is adhered to that the codes are positioned behind each other first for each column from top to bottom and then for each row from left to right, with the N, L and R— in this sequence— as the last of the initial consonants and R, L and N as the first of the final consonants. In that situation, the codes form the string of characters which is fed to the printing equipment or computer unit.

In relation to the keys on which a combination of letters occurs, there is therefore the choice of assigning such a letter combination key either a separate code or a code which is made up of the codes associated with the separate letters.

A few more facilities are associated with this outline of the structure. Thus, the occurrence in the code string of the codes of the doubling keys and of a vowel key will result in the calling of a combination routine (CR), on the basis of which a doubling of said vowel occurs. As stated, there is also the possibility in a few positions of forming a different letter combination, such as the English ending -ING by means of a double position as a result of simultaneously depressing the keys -es and -ed. If the codes of those two keys occur together, the result is also the calling of the combination routine which provides for these codes to be replaced by the code(s) for the letter combination -ING in the final character string.

Figure 4 shows a simple block diagram of the manner in which the electronic processing unit in the keyboard is connected to an external processing unit (printing unit, computer, etc.).

The keyboard KB is connected to the processing unit PU via an input circuit IN. With the aid of the input circuit, the PU determines the status of each of the keys, only two states being possible for each key, viz. struck or not struck. On the basis of the code string which is consequently made available to the PU and the CR provided to the PU, the letter or character string thus obtained is then fed out via the output circuit OUT to the printing unit or computer unit CU. For this purpose, the PU is connected via the IN and OUT to the keyboard and the CU.

The PU scans the keyboard at regular time intervals, information being received on the state of the keys and this information representing an ordered set of characters. At the instant all the keys are released again after a group of keys has been struck, the zero status is detected and this signals the NEW status. A memory field indicates which code series has been typed in since the last NEW signal. After the NEW status has been reached, the code string is placed in a cyclic buffer CBUF, which CBUF can contain a number of said code strings. The contents of the CBUF are converted by means of the CR into a character string which is placed in a different memory and is ready for transmitting to a CU.

The above procedures are repeated ten to thirty times per second and result in a minimum of 2 to 3 key scans per stroke.

Correction of characters which have already been transmitted to a CU is possible at two levels, viz. erasure of the last character by means of the backspace key (←) and erasure of the whole of the last stroke by means of the DEL INPUT key.

The combination shown in Figures 1 and 2 of a text input block, a cursor and screen-control block and a numerical block is achieved by adding a multipurpose key pad and extending the numerical pad with twelve keys including an ENTER key, and a liquid crystal display situated in the top right-hand corner.

The multipurpose key pad contains three memo keys which serve to assign sections of text to other keys. These stored key strokes can be copied at any desired instant from a memory starting from a position indicated by the cursor.

The procedure is as follows : press MEMO LOAD, give the section of text which is to be stored a name by depressing one of the function keys (for example, F4), press MEMO BEGIN and type in the text to be stored. Terminate the load procedure by depressing MEMO END. The text can now be reproduced starting from any desired position by depressing MEMO LOAD and MEMO BEGIN together followed by the name of the section of text (in the example, F4).

The stored key strokes can be erased by repeating the load operation in accordance with the above, with the proviso that MEMO BEGIN and MEMO END now have to be depressed together after typing the name.

The multipurpose pad also contains three on/off function keys, viz. AUTO CAPS, AUTO SPACE and CALC LOCK, in which case, if AUTO CAPS is switched on, the use of the punctuation signs . and ? and ! in the text input block will result in the setting of a capital letter for the next stroke without the shift key having to be used at the same time. In the switched-on state, AUTO SPACE ensures that after every punctuation mark and close bracket, the associated space is automatically obtained and also that the punctuation marks, the oblique stroke, close bracket and close quotation mark follow the preceding letter (combination)s without a space. Apart from this, with AUTO SPACE and CAPS LOCK switched on, every space preceding the use of punctuation marks, close bracket and close quotation mark will automatically be erased.

The last key of the multipurpose block is the CALC LOCK key. If this function is switched on, all the keys with the exception of all the keys of the numerical block are disabled in order to be able in this way to carry out "off-line" calculations. The numerical block then behaves as a calculator, the results of the calculation not appearing immediately on the screen but on the display of the keyboard. The accuracy of the results can be adjusted with the aid of N DEC key, in which case the standard two decimal places are employed. By switching off the CALC function again, the result can be fed out of the display to the CU by depressing the ENTER key.

## Claims

1. Keyboard for recording and/or reproducing written information in a typewriter, word processor, printer, computer or in telecommunications equipment, according to the principle of the so-called word typewriter, which keyboard has a group of vowel keys (4) in the centre consisting of three columns, to the left thereof a group of initial consonant keys (5) and to the right thereof a group of final consonant keys (6), the vowel keys in the outer columns of the vowel keys group (4) each forming part of a row in an adjacent block of keys otherwise containing consonants, and also facilities for reproducing capitals of the letters and for reproducing figures anti punctuation marks, the keys in some cases being situated in blocks containing both rows and columns and the keys in the centre column of the vowel keys and the bottom rows — intended to be operated with the thumb — of consonant keys are offset with respect to the adjacent row or column, respectively, all the keys being connected to an electronic processing unit which, by means of code signals, arranges the information from keys struck approximately or exactly simultaneously into syllabes to be recorded or to be reproduced, **characterized in that** the group of initial consonant keys (5) and the group of final consonant keys (6) both contain substantially all the consonants, and in that the vowel keys in the centre column are hexagonal and are inserted between the keys of the outer columns which are matchingly shaped at the adjacent side.

2. Keyboard according to claim 1, **characterized in that** a doubling key is situated beneath the group of vowel keys and/or at one or more positions in the consonant blocks.

3. Keyboard according to claim 1 or 2, there being a space bar at the bottom, **characterized in that** the length of the space bar is chosen so that it runs from the first initial consonant in the bottom row to the last final consonant in the bottom row.

4. Keyboard according to any of the preceding claims, **characterized in that** the block of initial consonants (5) also contains keys for combinations of initial consonants.

5. Keyboard according to any of the preceding claims, **characterized in that** the block of final consonant keys (6) also contains keys for letter combinations or word endings.

6. Keyboard according to any of the preceding claims, **characterized in that** a selection key (AUTO CAPS) is present for switching on and off the generation of the capital form of the letters after the sentence-ending punctuation mark.

7. Keyboard according to any of the preceding claims, **characterized in that** as selection key (AUTO SPACE) is present for switching on and off the setting of a space before and/or after the punctuation marks and other symbols.

8. Keyboard according to any of the preceding claims, **characterized in that** the , . : ; are situated on keys adjacent to each other at the end of the final consonant block (6).

9. Keyboard according to any of the preceding claims, **characterized in that** the keys have sloping side faces, but the keys which are intended to be struck with adjacent keys in multiple positions have straight side faces at the side(s) which face(s) the adjacent key(s) concerned.

10. Keyboard according to any of the preceding claims, a device being present which assigns a specific code to each key, **characterized in that** also a device is present which arranges the code string of said codes of all the (substantially) simultaneously struck keys into a character string.

11. Keyboard according to claim 10, **characterized in that** if the code associated with a doubling key is present in a code string, said device doubles the code for the vowel present in the code string, and if two or three vowels are present, generates the codes for a different letter combination.

12. Keyboard according to any of the preceding claims, in which a section (2) containing cursor and screen-control keys and also a numerical section (3) are present in addition to the text input section (1), **characterized in that** a number of keys is provided for combining the text input section (1) and the numerical section (3), and also a ENTER Key in the numerical section (3).

13. Keyboard, constructed as described in one or more of the preceding claims, **characterized in that** the keys are distributed over at least 5 rows in a manner such that, as the principle underlying the partitioning, the keys in the third row contain letters which — in the language for which the keyboard is optimized — occur most frequently, singly or in groups, the second and the fourth two contain the less frequently occurring letters, and the first and the fifth row contain letters which occur least frequently.

14. Keyboard according to claim 13, **characterized in that**, furthermore, the consonants which — again in the language for which the keyboard is optimized — are most frequently just in front of or behind the vowels when they occur together with other consonants, are placed in a special position with respect to the vowel keys.

## Patentansprüche

1. Tastatur zur Aufzeichnung und/oder Wiedergabe geschriebener Information in einer Schreibmaschine, einem Textverarbeitungssystem, Drucker, Computer oder einer Telekommunikationsanlage entsprechend dem Prinzip der sog. Wortschreibmaschine, wobei die Tastatur eine Gruppe von Vokaltasten (4) in dem aus drei Kolonnen bestehenden Zentrum aufweist, von dem sich links eine Gruppe von Anfangskonsonantentasten (5) und rechts eine Gruppe von Endkonsonantentasten (6) befinden, die Vokaltasten in den äußeren Kolonnen der Vokaltastengruppe (4) jeweils Teil einer Reihe in einem benachbarten Block von Tasten bilden, der ansonsten Konsonanten enthält, und die auch die Wiedergabe von Großbuchstaben und die Wiedergabe von Zahlen und Interpunktionszeichen erleichtert, wobei die Tasten in manchen Fällen in Blöcken angeordnet sind, die sowohl Reihen als auch Kolonnen enthalten und die Tasten in der zentralen Kolonne der Vokaltasten und die unteren — mit dem Daumen zu betätigenden — Reihen der Konsonantentasten bezüglich der benachbarten Reihe bzw. Kolonne versetzt sind, wobei alle Tasten an eine elektronische Prozessoreinheit angeschlossen sind, die die Information von Tasten, die etwa oder genau gleichzeitig angeschlagen werden, mittels Codesignalen zu Silben ordnet, die aufgezeichnet oder wiedergegeben werden sollen, **dadurch gekennzeichnet, daß** die Gruppe der Anfangskonsonantentasten (5) und die Gruppe der Endkonsonantentasten (6) beide im wesentlichen alle Konsonanten enthalten und daß die Vokaltasten in der zentralen Kolonne eine hexagonale Form aufweisen und zwischen die Tasten der äußeren Kolonnen eingesetzt sind, die sich in angepaßter Form an der benachbarten Seite befinden.

2. Tastatur gemäß Anspruch 1, **dadurch gekennzeichnet, daß** sich eine Verdoppelungstaste unterhalb der Gruppe von Vokaltasten und/oder an einer oder mehreren Positionen in den Konsonantenblöcken befindet.

3. Tastatur gemäß Anspruch 1 oder 2 mit einer Leertaste unten, **dadurch gekennzeichnet, daß** die Länge der Leertaste so gewählt ist, daß sie vom ersten Anfangskonsonanten in der unteren Reihe bis zum letzten Endkonsonanten der unteren Reihe verläuft.

4. Tastatur gemäß irgendeinem der vorhergehenden Ansprüche, **dadurch gekennzeichnet, daß** der Block der Anfangskonsonanten (5) auch Tasten für Kombinationen von Anfangskonsonanten aufweist.

5. Tastatur gemäß irgendeinem der vorhergehenden Ansprüche, **dadurch gekennzeichnet, daß** der Block der Endkonsonantentasten (6) aus Tasten für Buchstabenkombinationen oder Wortendungen aufweist.

6. Tastatur gemäß irgendeinem der vorhergehenden Ansprüche, **dadurch gekennzeichnet, daß** eine Wähltaste (AUTO CAPS) zum An- und Abschalten der Bildung der Großbuchstabenform nach dem den Satz beendenden Interpunktionszeichen vorliegt.

7. Tastatur gemäß irgendeinem der vorhergehenden Ansprüche, **dadurch gekennzeichnet, daß** eine Wähltaste (AUTO SPACE) vorliegt, um das Setzen eines Abstandes vor und/oder nach den Interpunktionszeichen und anderen Symbolen an- und abzuschalten.

8. Tastatur gemäß irgendeinem der vorhergehenden Ansprüche, **dadurch gekennzeichnet, daß** , . : ; auf einander benachbarten Tasten am Ende des Endkonsonantenblockes (6) liegen.

9. Tastatur gemäß irgendeinem der vorhergehenden Ansprüche, **dadurch gekennzeichnet, daß** die Tasten geneigte Seitenflächen haben, daß jedoch die Tasten, die mit benachbarten Tasten in Mehrfachpositionen angeschlagen werden sollen, gerade Seitenfläche an der oder den Seite(n) aufweisen, die an die betreffende(n) benachbarte(n) Taste(n) angrenzen.

10. Tastatur gemäß irgendeinem der vorhergehende Ansprüche, bei der eine Vorrichtung vorhanden ist, die jeder Taste eine spezifischen Code zuweist, **dadurch gekennzeichnet, daß** auch eine Vorrichtung vorliegt, die die Code-Kette dieser Code aller (im wesentlichen) gleichzeitig angeschlagenen Tasten zu einer Zeichenkette anordnet.

11. Tastatur gemäß Anspruch 10, **dadurch gekennzeichnet, daß**, wenn der mit einer Verdoppelungstaste assoziierte Code in einer Code-Kette vorliegt, die Vorrichtung den Code für den vorliegenden Vokal in der Code-Kette verdoppelt und, wenn zwei oder drei Vokale vorliegen, die Code für eine unterschiedliche Buchstabenkombination bildet.

12. Tastatur gemäß irgendeinem der vorhergehenden Ansprüche, in der, zusätzlich zum Texteingabeteil (1) ein Cursor- und Bildschirmkontrolltasten enthaltender Teil (2) sowie ein numerischer Teil (3) vorliegt, **dadurch gekennzeichnet, daß** eine Anzahl von Tasten zum Kombinieren des Texteingabeteils (1) und des numerischen Teils (3) sowie eine ENTER-Taste im numerischen Teil (3) vorgesehen sind.

13. Tastatur, die konstruiert ist, wie es in einem oder mehreren der vorhergehenden Ansprüche beschrieben wird, **dadurch gekennzeichnet, daß** die Tasten über mindestens 5 Reihen in solcher Weise verteilt sind, daß — als das der Verteilung zugrundeliegende Prinzip — die Tasten in der dritten Reihe Buchstaben enthalten, die — in der Sprache, für die die Tastatur optimiert ist — einzeln oder in Gruppen am häufigsten vorkommen, die beiden zweiten und vierten Reihen die weniger häufig vorkommenden Buchstaben enthalten und die erste und die fünfte Reihe Buchstaben enthalten, die am seltensten vorkommen.

14. Tastatur gemäß Anspruch 13, **dadurch gekennzeichnet**, daß ferner — wiederum in der Sprache, für die die Tastatur optimiert ist — die Konsonanten, die sich am häufigsten unmittelbar vor oder hinter den Vokalen befinden, wenn sie zusammen mit anderen Konsonanten vorkommen, in einer speziellen Position in Bezug zu den Vokaltasten angeordnet sind.

## Revendications

1. Clavier pour enregistrer et/ou reproduire des informations écrites dans une machine à écrire, une machine de traitement de texte, une imprimante, un ordinateur ou un appareil de télécommunications, conformément au principe de ce que l'on appelle la machine à écrire des mots, clavier qui comporte, au centre, un groupe de touches de voyelles (4) composé de trois colonnes, à gauche de celui-ci, un groupe de touches de consonnes initiales (5) et, à droite de celui-ci, un groupe de touches de consonnes finales (6), les touches de voyelles situées dans les colonnes extérieures du groupe de touches de voyelles (4) faisant chacune partie d'une rangée d'un bloc de touches adjacent qui, autrement, comprend des consonnes, et également des moyens pour reproduire les lettres en majuscules et pour reproduire des chiffres et des signes de ponctuation, les touches étant, dans certains cas, situées dans des blocs comprenant à la fois des rangées et des colonnes, et les touches situées dans la colonne centrale des touches de voyelles et dans les rangées inférieures — destinées à être actionnées avec le pouce — de touches de consonnes étant respectivement décalées par rapport à la rangée ou à la colonne adjacente, tandis que toutes les touches sont reliées à une unité de traitement électronique qui, au moyen de signaux de code, agence les informations provenant de touches frappées approximativement ou exactement en même temps, en syllabes destinées à être enregistrées ou reproduites, **caractérisé en ce que** le groupe de touches de consonnes initiales (5) et le groupe de touches de consonnes finales (6) contiennent tous deux sensiblement toutes les consonnes, et en ce que les touches de voyelles situées dans la colonne centrale sont hexagonales et insérées entre les touches des colonnes extérieures qui sont conformées d'une manière adaptée au niveau du côté adjacent.

2. Clavier selon la revendication 1, **caractérisé en ce qu'**il est prévu une touche de doublement située au-dessous du groupe de touches de voyelles et/ou au niveau d'au moins une position dans le bloc de consonnes.

3. Clavier selon la revendication 1 ou 2, dans lequel il est prévu une barre d'espacement au niveau de la partie inférieure, **caractérisé en ce que** la longueur de la barre d'espacement est choisie de façon à s'étendre depuis la première consonne initiale de la rangée inférieure jusqu'à la dernière consonne finale de la rangée inférieure.

4. Clavier selon l'une quelconque des revendications précédentes, **caractérisé en ce que** le bloc de consonnes initiales (5) comporte également des touches destinées à des combinaisons de consonnes initiales.

5. Clavier selon l'une quelconque des revendications précédentes, **caractérisé en ce que** le bloc de touches de consonnes finales (6) comporte également des touches destinées à des combinaisons de lettres ou à des fins de mots.

6. Clavier selon l'une quelconque des revendications précédentes, **caractérisé en ce qu'**il est prévu une touche de sélection (AUTO CAPS) destinée à activer ou à désactiver la production des lettres sous la forme majuscule après le signe de ponctuation de fin de phrase.

7. Clavier selon l'une quelconque des revendications précédentes, **caractérisé en ce qu'**il est prévu une touche de sélection (AUTO SPACE) pour activer et désactiver la mise en place d'un espace avant et/ou après les signes de ponctuation et d'autres symboles.

8. Clavier selon l'une quelconque des revendications précédentes, **caractérisé en ce que** les , . : ; sont situés sur des touches adjacentes les unes aux autres, à l'extrémité du bloc de consonnes finales (6).

9. Clavier selon l'une quelconque des revendications précédentes, **caractérisé en ce que** les touches ont des faces latérales inclinées, mais les touches qui sont destinées à être frappées avec des touches adjacentes dans des positions multiples, possèdent des faces latérales droites au niveau du ou des côté(s) tourné(s) vers la ou les touche(s) adjacente(s) concernée(s).

10. Clavier selon l'une quelconque des revendications précédentes, dans lequel il est prévu un dispositif qui assigne un code spécifique à chaque touche, **caractérisé en ce qu'**il est également prévu un dispositif qui agence la chaîne de codes desdits codes de toutes les touches frappées (sensiblement) en même temps, sous la forme d'une chaîne de caractères.

11. Clavier selon la revendication 10, **caractérisé en ce que**, si le code associé à une touche de doublement est présent dans une chaîne de codes, ledit dispositif double le code pour la voyelle présente dans la chaîne de codes, tandis que, si deux ou trois voyelles sont présentes, il génère les codes destinés à une combinaison de lettres différente.

12. Clavier selon l'une quelconque des revendications précédentes, dans lequel il est prévu, en plus de la partie d'entrée de texte (1), une partie (2) comportant des touches de curseur et de commande d'écran et également une partie numérique (3),

caractérisé **en ce qu'**il est prévu un certain nombre de touches destinées à combiner la partie d'entrée de texte (1) et la partie numérique (3), et également une touche ENTER dans la partie numérique (3).

13. Clavier conçu comme il a été décrit dans l'une au moins des revendications précédentes, **caractérisé en ce que** les touches sont réparties sur au moins 5 rangées de telle manière que, comme principe sur lequel repose la répartition, les touches de la troisième rangée comportent des lettres qui — dans la langue pour laquelle le clavier est optimisé — se présentent très fréquemment, seules ou en groupes, la seconde et la quatrième rangées comportent les lettres qui se présentent le moins fréquemment, et la première et la cinquième rangées des lettres qui se présentent moins fréquemment.

14. Clavier selon la revendication 13, **caractérisé en ce qu'**en outre, les consonnes qui — là encore, dans la langue pour laquelle le clavier est optimisé — sont très fréquemment situées immédiatement devant ou derrière les voyelles, lorsqu'elles se présentent conjointement avec d'autres consonnes, sont placées dans une position spéciale par rapport aux touches de voyelles.

7 { Esc.

F1 F2 F3 F4   F5 F6 F7 F8   F9 F10 F11 F12

Print Screen Sys.Req | Scroll Lock | Pause Break

DISPLAY

@ [ | & ( | 1 | 2 | 3 | 4 | 5 | 6 | 7 | 8 | 9 | 0 | % ) | $ ] | £ }

Memo Load | Memo Begin | Memo End

Num Lock | N dec (st.2) | CE | C

# | " ; | V | K | D | U | ⌃ | Z | V | E | ' | -es | ƒ −

Auto Caps | Auto Space | Calc Lock

√x̄ | X² | 1/x | %

O

Rh· | B | P | W | A | U | P | M | S | X | -ed | · +

I

M | M⁺ | RM | CM

Shift | Z | S | T | H | E | O | B | D | T | S | -e | =

A

Insert | Home | Page Up

= | / | * | −

Ctrl | G | M | F | C | O | E | ·Gn | G | H | T | -ks | ! *

U

Delete | End | Page Down

7 Home | 8 ↑ | 9 Pg Up

Del Input | Ps· | Y | J | Q | I | I | W | F | C | K | Alt

4 ← | 5 | 6 →

← | ⁞ / | N | L | R | ▲▼▲ | R | L | N | Shift | ↵ | ~ /

↑

1 End | 2 ↓ | 3 Pg Dn | +

Caps Lock | Alt | Space | ‹ , | › . | ? : | ! ;

← | ↓ | →

0 Ins | · Del | Enter

5   4   6   2   3

1

EP 0 297 663 B1

12

Fig. 1.

EP 0 297 663 B1

Esc.

F1 F2 F3 F4  F5 F6 F7 F8  F9 F10 F11 F12

Print Screen / Sys.Req | Scroll Lock | Pause / Break

DISPLAY

@ [ | & ( | 1 | 2 | 3 | 4 | 5 | 6 | 7 | 8 | 9 | 0 | % ) | $ ] | £ }

Memo Load | Memo Begin | Memo End

Num Lock | N dec (st.2) | CE | C

# ( | Sch· | Ts· | F | J | ", ; | ⌃ ≺ | X | ·sk | ·sd | ·sp | ·isch | ƒ −

Auto Caps | Auto Space | Calc Lock

√x̄ | X² | ¹/ₓ | %

B | K | P | D | E | Y | IJ | B | G | F | S | ·lijk | · +

A

M | M⁺ | RM | CM

Shift | G | S | T | H | I | U | N | K | D | T | ·e | =

E

Insert | Home | Page Up

= | / | • | −

Ctrl | Z | V | M | C | O | I | M | P | S | Ts | ·en | !

U

Delete | End | Page Down

7 Home | 8 ↑ | 9 Pg Up

Del Input | Q | X | Ps· | W | A | E | C | W | ·ch | V | Alt

4 ← | 5 | 6 →

← | ¦ | N | L | R | ▲▽▲ | R | L | N | Shift | ↵ | ∼

↑

1 End | 2 ↓ | 3 Pg Dn

Enter

Caps Lock | Alt | Space | ‹ , | › . | ? . | ! ;

← | ↓ | →

0 Ins | · Del

FIG:2.

Shift     Z     S     T     H     E

*Fig: 5.*

| KB | | IN | PU | OUT | | CU |

*Fig: 4.*

EP 0 297 663 B1